(19) Europäisches Patentamt
European Patent Office
Office européen des brevets

(11) EP 4 130 082 A1

(12) EUROPÄISCHE PATENTANMELDUNG

(43) Veröffentlichungstag:
**08.02.2023 Patentblatt 2023/06**

(21) Anmeldenummer: **21189140.3**

(22) Anmeldetag: **02.08.2021**

(51) Internationale Patentklassifikation (IPC):
***C08G 18/28*** (1974.07) ***C08G 18/18*** (1974.07)
***C08G 18/20*** (1974.07) ***C08G 18/24*** (1974.07)
***C08G 18/40*** (1974.07) ***C08G 18/08*** (1974.07)
***C08G 18/48*** (1974.07) ***C08G 18/32*** (1974.07)
***C08G 18/66*** (1974.07) ***C08G 18/76*** (1974.07)
***C08G 18/16*** (1974.07)

(52) Gemeinsame Patentklassifikation (CPC):
**C08G 18/2815; C08G 18/0876; C08G 18/165; C08G 18/1825; C08G 18/1833; C08G 18/1841; C08G 18/2063; C08G 18/244; C08G 18/2825; C08G 18/2835; C08G 18/3206; C08G 18/409; C08G 18/4812; C08G 18/482; C08G 18/4825;**

(Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Gossner, Matthaeus**
  **51061 Köln (DE)**
- **Brassat, Lutz**
  **51375 Leverkusen (DE)**
- **Faerber, Veronica-Alina**
  **51467 Bergisch Gladbach (DE)**
- **Schlecht, Sebastian**
  **40721 Hilden (DE)**
- **Beaujean, Joern**
  **51467 Bergisch Gladbach (DE)**

(74) Vertreter: **Levpat**
**c/o Covestro AG**
**Gebäude K12**
**51365 Leverkusen (DE)**

# (54) VERFAHREN ZUR VERMINDERUNG VON AMINSPUREN IN POLYURETHANSCHAUMSTOFFEN

(57) Die vorliegende Erfindung betrifft ein Verfahren zur Herstellung von Polyurethan-Weichschaumstoffen, wobei die Komponenten
**A** enthaltend
**A1** Verbindungen mit gegenüber Isocyanaten reaktionsfähigen Wasserstoffatomen,
**A2** Treibmittel
und gegebenenfalls
**A3** Hilfs- und Zusatzstoffe wie
a) Katalysatoren,
b) oberflächenaktive Zusatzstoffe,
c) Pigmente und/oder Flammschutzmittel

und
**B** Di- und/oder Polyisocyanaten,
miteinander umgesetzt werden, dadurch gekennzeichnet, dass die Komponente **A1** 0,25 bis 1,75 Gew.-% (bezogen auf das Gesamtgewicht der Komponente **A)** Komponente **A1.1** enthält, und **A1.1** aus mindestens einer Verbindung gemäß Formel (I) oder (II) besteht,

EP 4 130 082 A1

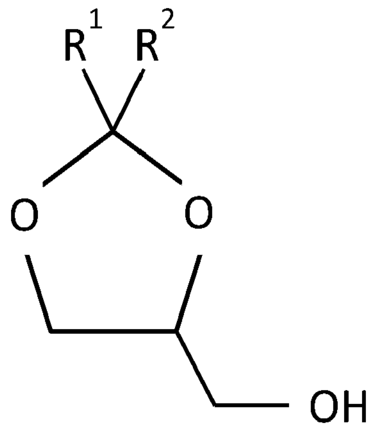

(I)

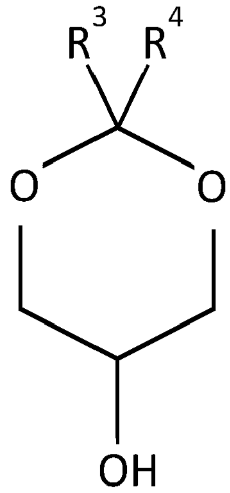

(II)

wobei
$R^1$, $R^2$, $R^3$ und $R^4$ unabhängig voneinander für H oder ein Cl- bis C3-Alkylrest stehen.

(52) Gemeinsame Patentklassifikation (CPC): (Forts.)
**C08G 18/4829; C08G 18/4837; C08G 18/6677; C08G 18/7607; C08G 18/7621; C08G 18/7664;**
C08G 2110/0008; C08G 2110/005; C08G 2110/0058; C08G 2110/0083; C08G 2350/00

## Beschreibung

Die vorliegende Erfindung betrifft ein Verfahren zur Herstellung von Polyurethan-Weichschaumstoffen unter Verwendung von emissionsreduzierenden Verbindungen, die erhaltenen Polyurethan-Weichschaumstoffe selbst und die Verwendung der emissionsvermindernden Verbindungen.

Bei der Herstellung von Polyurethan-Weichschaumstoffen entstehen Verbindungen als Nebenprodukte, die aus den Polyurethan-Weichschaumstoffen emittieren können. Beispiele hierfür sind die Bildung von aromatischen Aminen wie z.B. Toluylendiamin (TDA) und Methylendiphenyldiamin (MDA), die bei Isocyanat-Kennzahlen von unter 100 auftreten. Auf Grund der gesundheitsbedenklichen Eigenschaften dieser Verbindungen ist es notwendig die Bildung oder Emission von Spuren dieser Verbindungen zu reduzieren.

Additive zur Reduktion von aromatischen Aminen sind aus dem Stand der Technik bekannt. So werden in DE 199 19 826 A1 zur Reduktion von aromatischen Aminen bei der Herstellung von Polyurethanschaumstoffen α,β-ungesättigte Carbonsäuren, α,β-ungesättigte Carbonsäurederivate, α,β-ungesättigte Ketone und/oder α,β-ungesättigte Aldehyde offenbart, wie beispielsweise Hydroxyethylacrylat. Eine weitere Gruppe zur Reduktion von aromatischen Aminen sind beispielsweise Lactame wie in DE 199 28 687 A1 und in WO 2020/084003 A1 offenbart. In keiner dieser Offenbarungsschriften wird jedoch eine Komponente **A1.1** gemäß Formel (I) oder (II) eingesetzt.

Die Aufgabenstellung der vorliegenden Erfindung ist die Bereitstellung eines Verfahrens zur Herstellung von Polyurethan-Weichschaumstoffen mit vermindertem Gehalt an aromatischen Aminen.

Gegenstand der vorliegenden Erfindung ist ein Verfahren zur Herstellung von Polyurethan-Weichschaumstoffen, wobei die Komponenten

**A** enthaltend

**A1** Verbindungen mit gegenüber Isocyanaten reaktionsfähigen Wasserstoffatomen,
**A2** Treibmittel
und gegebenenfalls
**A3** Hilfs- und Zusatzstoffe wie

a) Katalysatoren,
b) oberflächenaktive Zusatzstoffe,
c) Pigmente und/oder Flammschutzmittel

und
**B** Di- und/oder Polyisocyanaten, bei einer Isocyanat-Kennzahl von unter 100 miteinander umgesetzt werden, dadurch gekennzeichnet, dass die Komponente **A1** 0,25 bis 1,75 Gew.-% (bezogen auf das Gesamtgewicht der Komponente **A**) Komponente **A1.1** enthält, und **A1.1** aus mindestens einer Verbindung gemäß Formel **(I)** oder **(II)** besteht,

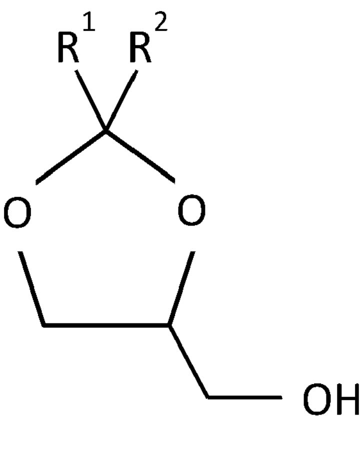

(I)

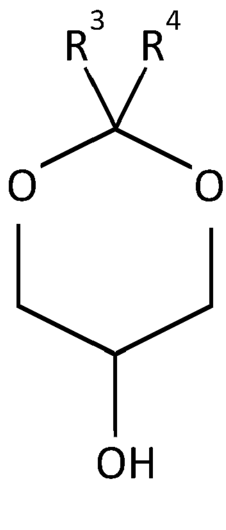

(II)

wobei
$R^1$, $R^2$, $R^3$ und $R^4$ unabhängig voneinander für H oder ein C1- bis C3-Alkylrest stehen.

Gegenstand der vorliegenden Erfindung sind auch die nach dem beschriebenen Verfahren erhältlichen Polyurethan-Weichschaumstoffe und die Verwendung der Verbindung **A1.1** zur Verminderung des Gehaltes an aromatischen Aminen in Polyurethan-Weichschaumstoffen.

**Komponente A1**

Als Verbindungen mit gegenüber Isocyanat reaktionsfähigen Wasserstoffatomen können beispielsweise Polyole ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt werden. Bevorzugt sind Polyesterpolyole und/oder Polyetherpolyole. Die Verbindungen der Komponente **A1** können eine Amin- und/oder Hydroxylzahl zwischen 15 bis 4000 mg KOH/g und eine Funktionalität von 1 bis 8 aufweisen. Vorzugsweise weisen die Verbindungen der Komponente **A1** ein zahlenmittleres Molekulargewicht von 2000 g/mol bis 15000 g/mol, insbesondere 3000 g/mol bis 12000 g/mol und besonders bevorzugt 3500 g/mol bis 6500 g/mol auf. Werden mehr als nur eine Verbindung der Komponente **A1** verwendet, kann die Mischung aus Verbindungen der Komponente **A1** bevorzugt eine Hydroxylzahl zwischen 20 bis 200 mg KOH/g, insbesondere 25 bis 100 mg KOH/g aufweisen.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Erfindungsgemäß enthält die Komponente **A1** 0,25 bis 1,75 Gew.-%, bevorzugt 0,40 bis 1,50 Gew.-%, besonders bevorzugt 0,40 bis 1,00 Gew.-%, (jeweils bezogen auf das Gesamtgewicht der Komponente **A**) Komponente **A1.1,** welche aus mindestens einer Verbindung gemäß Formel (I) oder (II) besteht,

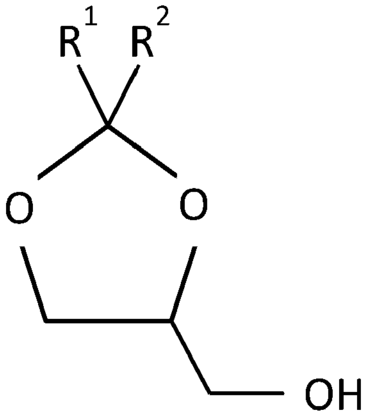

(I)

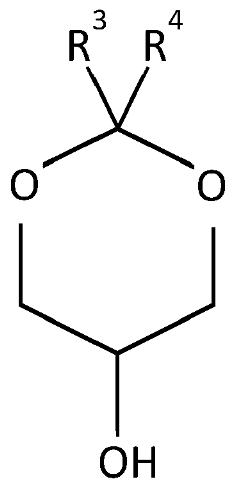

(II)

wobei
$R^1$, $R^2$, $R^3$ und $R^4$ unabhängig voneinander für H oder ein C1- bis C3-Alkylrest stehen, bevorzugt für H, eine Methyl- oder eine Ethylgruppe, besonders bevorzugt $R^1$ und $R^2$ für H und $R^3$ und $R^4$ für H, eine Methyl- oder eine Ethylgruppe. In einer bevorzugten Ausführungsform sind $R^1$, $R^2$, $R^3$ und $R^4$ gleich, besonders bevorzugt ist die Komponente **A1.1** ausgewählt aus Isopropylidenglycerin, 1,3-Dioxolan-4-methanol, 1,3-Dioxan-5-ol und Gemischen aus den genannten Verbindungen, ganz besonders bevorzugt ist die Komponente **A1.1** ausgewählt aus 1,3-Dioxolan-4-methanol, 1,3-Dioxan-5-ol oder Gemischen der beiden Verbindungen.

Verwendbare Polyetheresterpolyole gemäß der Komponente **A1** sind solche Verbindungen, die Ethergruppen, Estergruppen und OH-Gruppen enthalten. Vorzugsweise werden organische Dicarbonsäuren mit bis zu 12 Kohlenstoffatomen zur Herstellung der Polyetheresterpolyole eingesetzt, bevorzugt aliphatische Dicarbonsäuren mit 4 bis 6 Kohlenstoffatomen oder aromatische Dicarbonsäuren, die einzeln oder im Gemisch verwendet werden. Beispielhaft seien

Korksäure, Azelainsäure, Decandicarbonsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isophthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Ethylenglykol, Propylenglykol, 1,3-Butandiol, 1,4-Butandiol, 1,5-Pentendiol, 1,5-Pentandiol, 1,6-Hexandiol, 1,7-Heptandiol, 1,8-Octandiol, 1,10-Decandiol, 2-Methylpropan-1,3-diol, Neopentylglykol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Diethylenglykol, Dipropylenglykol, Glycerin, Trimethylolpropan, di- und trifunktionelle Polyetherpolyole. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol. Auch Startermoleküle mit von OH verschiedenen Funktionalitäten können allein oder in Mischung eingesetzt werden.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z. B. Di-, Tri- oder sogar Tetracarbonsäuren oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Milchsäure, Äpfelsäure, Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Die Polyetherpolyole der Komponente **A1** werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEA), Imidazol und/oder Imidazolderivate, oder DMC-Katalysatoren unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Copolymere des Propylenoxids mit Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5-und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Paraformaldehyd, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2-und 1,3-Propandiol, 1,3-und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Als Verbindungen mit gegenüber Isocyanaten reaktionsfähigen Wasserstoffatomen können auch Polymerpolyole, PHD-Polyole und PIPA-Polyole in Komponente **A1** eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyhydrazodicarbonamid)-Polyole werden beispielsweise hergestellt durch in situ Polymerisation eines Isocyanats oder einer Isocyanat-Mischung mit einem Diamin und/oder Hydrazin (bzw. Hydrazinhydrat) in einem Polyol, bevorzugt einem Polyetherpolyol. Bevorzugt wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazinhydrat in einem Polyetherpolyol hergestellt durch Alkoxylierung eines trifunktionellen Starters (wie beispielsweise Glycerin und/oder Trimethylolpropan). Bei PIPA-Polyolen handelt es sich um durch Polyisocyanat-Polyaddition mit Alkanolaminen-modifizierte Polyetherpolyole, wobei das Polyetherpolyol bevorzugt eine Funktionalität von 2,5 bis 4,0 und eine Hydroxylzahl von 3 mg KOH/g bis 112 mg KOH/g (Molekulargewicht 500 g/mol bis 18000 g/mol) aufweist.

Es können auch Isocyanat-reaktive Substanzen mit zellöffnender Wirkung eingesetzt werden, wie beispielsweise Copolymere aus Ethylenoxid und Propylenoxid mit einem Überschuss an Ethylenoxid oder aromatischen Diaminen wie Diethyltoluendiamin.

Neben den oben beschriebenen Isocyanat-reaktiven Verbindungen können in der Komponente **A1** beispielsweise Graft-Polyole, Polyamine, Polyaminoalkohole und Polythiole enthalten sein. Die beschriebenen Isocyanat-reaktiven Komponenten umfassen auch solche Verbindungen mit gemischten Funktionalitäten.

Für die Herstellung von Polyurethanschaumstoffen im Kaltschaumverfahren werden bevorzugt mindestens zwei Hydroxylgruppen aufweisenden Polyether mit einer OH-Zahl von 20 bis 50 mg KOH/g eingesetzt, wobei die OH-Gruppen zu mindestens 80 Mol-% aus primärem OH-Gruppen bestehen (Bestimmung mittels $^1$H-NMR (z.B. Bruker DPX 400, Deuterochloroform)). Besonders bevorzugt beträgt die OH-Zahl 25 bis 40 mg KOH/g, ganz besonders bevorzugt 25 bis 35 mg KOH/g.

Gegebenenfalls werden zusätzlich in der Komponente **A1** Verbindungen mit mindestens zwei gegenüber Isocyanaten reaktionsfähigen Wasserstoffatomen und einer OH-Zahl von 280 bis 4000 mg KOH/g, bevorzugt 400 bis 3000 mg KOH/g, besonders bevorzugt 1000 bis 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise

Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Triethanolamin, Sorbit und/oder Glycerin eingesetzt werden.

Die Komponente **A1** kann aus einer oder mehreren der oben genannten Isocyanat-reaktiven Komponenten bestehen, bevorzugt enthält die Komponente **A1** mindestens zwei Hydroxylgruppen aufweisenden Polyether, gegebenenfalls in Mischung mit mindestens zwei Hydroxylgruppen aufweisenden Polyestern.

In einer bevorzugten Ausführungsform enthält die Komponente **A1:**

**A1.1** 0,25 bis 1,75 Gew.-Teile (bezogen auf die Summe der Gew.-Teile aller Komponenten **A** = 100 Gew.-Teile) mindestens einer Verbindung gemäß Formel (I) oder (II),

**A1.2** gegenüber Isocyanaten reaktionsfähige Wasserstoffatome aufweisende Verbindungen mit einer NH-Zahl gemäß DIN 53176 in der Fassung von November 2002 und/oder OH-Zahl gemäß DIN 53240-1 in der Fassung von Juni 2013 von 20 bis < 120 mg KOH/g,
gege benenfalls

**A1.3** gegenüber Isocyanaten reaktionsfähige Wasserstoffatome aufweisende Verbindungen mit einer NH- Zahl gemäß DIN 53176 in der Fassung von November 2002 und/oder OH-Zahl gemäß DIN 53240-1 in der Fassung von Juni 2013 von 120 bis < 600 mg KOH/g,
und gegebenenfalls

**A1.4** gegenüber Isocyanaten reaktionsfähigen Wasserstoffatomen aufweisenden Verbindungen mit einer NH- Zahl gemäß DIN 53176 in der Fassung von November 2002 und/oder OH-Zahl gemäß DIN 53240-1 in der Fassung von Juni 2013 von 600 bis 4000 mg KOH/g.

In einer weiteren bevorzugten Ausführungsform enthält die Komponente **A1** mindestens 30 Gew.-%, bezogen auf das Gesamtgewicht der Komponente **A1,** mindestens eines Polyoxyalkylen-Copolymers, bestehend aus einem Starter, Propylenoxid und Ethylenoxid und einem Endblock aus Ethylenoxid, wobei das Gesamtgewicht der Endblöcke aus Ethylenoxid im Mittel 3 - 20 Gew.-%, bevorzugt 5 - 15 Gew.-%, besonders bevorzugt 6 - 10 Gew.-% bezogen auf das gesamte Gewicht aller Polyoxyalkylen-Copolymere beträgt.

**Komponente A2**

Als Komponente **A2** werden chemische und/oder physikalische Treibmittel eingesetzt.

Als chemisches Treibmittel **A2.1** werden beispielsweise Wasser oder Carbonsäuren und deren Gemische verwendet. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, N,N-dialkylcarbaminsäure, Oxalsäure, Malonsäure und Ricinolsäure, eingesetzt. Auch die Ammoniumsalze dieser Säuren sind geeignet. Als chemisches Treibmittel wird besonders bevorzugt Wasser eingesetzt.

Als physikalisches Treibmittel **A2.2** eingesetzt werden beispielsweise niedrig siedende organische Verbindungen wie z. B. Kohlenwasserstoffe, Ether, Ketone, Carbonsäureester, Kohlensäureester, halogenierte Kohlenwasserstoffe. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele derartiger, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Difluormethan, Trifluormethan, Difluorethan, Tetrafluorethan, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer besonderen Ausführungsform enthält die Komponente **A2**

**A2.1** 0,1 bis 10 Gew.-Teile, bevorzugt 1 bis 5 Gew.-Tle. (jeweils bezogen auf die Summe der Gew.-Teile aller Komponenten **A** = 100 Gew.-Teile) chemische Treibmittel
und/oder

**A2.2** 0 bis 15 Gew.-Teile (bezogen auf die Summe der Gew.-Teile aller Komponenten **A** = 100 Gew.-Teile) physikalische Treibmittel

Besonders bevorzugt wird als Komponente **A2** Wasser eingesetzt.

## Komponente A3

Als Komponente **A3** werden Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesondere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Als Katalysatoren werden bevorzugt aliphatische tertiäre Amine (beispielsweise Triethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Aminoxide, aliphatische Amidine, cycloaliphatische Amidine, Harnstoff, Derivate des Harnstoffs (wie beispielsweise Aminoalkylharnstoffe), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt (i) Harnstoff, Derivate des Harnstoffs und/oder (ii) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin.

Bevorzugt liegt die Komponente A3 in einem Anteil von 0,5 bis 15 Gew.-Teile, bezogen auf die Summe der Gew.-Teile aller Komponenten A = 100 Gew.-Teile, vor.

## Komponente B

Als Komponente **B** werden aliphatische, cycloaliphatische, araliphatische, aromatische und heterocyclische Polyisocyanate eingesetzt, beispielsweise solche der Formel (II)

$$Q(NCO)_n \quad \text{(II)}$$

in der

n für eine ganze Zahl zwischen 2 - 4, vorzugsweise 2 oder 3 steht,
und

Q für einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen steht.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate,

wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Zur Herstellung der erfindungsgemäßen Polyurethan-Weichschaumstoffe werden die Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient.

Die Polyurethan-Weichschaumstoffe können als Form- oder auch als Blockschaumstoffe hergestellt werden, wobei die Formschaumstoffe heiß- oder auch kalthärtend hergestellt werden können.

Gegenstand der Erfindung sind daher ein Verfahren zur Herstellung von Polyurethan-Weichschaumstoffe, die nach diesem Verfahren hergestellten Polyurethanschaumstoffe und deren Verwendung zur Herstellung von Formteilen oder Blockware, sowie die Formteile bzw. die Blockware selbst.

Die nach der Erfindung erhältlichen Polyurethan-Weichschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen, und können Raumgewichte von 4 bis 600 kg/m$^3$, bevorzugt 60 bis 120 kg/m$^3$ (Halbhartschaum) bzw. bevorzugt 15 bis 55 kg/m$^3$ (Weichschaum) aufweisen.

Erfindungsgemäß liegt die Isocyanat-Kennzahl unter 100. Es wird vorzugsweise im Verfahren eine Isocyanat-Kennzahl von mindestens 60, bevorzugt mindestens 70 und besonders bevorzugt von mindestens 75 eingestellt. Vorzugsweise ist die Isocyanat-Kennzahl 95 oder weniger.

Unter der Isocyanat-Kennzahl (auch Kennzahl oder Isocyanat-Index genannt) wird der Quotient aus der tatsächlich eingesetzten Stoffmenge [Mol] an Isocyanatgruppen und der tatsächlich eingesetzten Stoffmenge [Mol] an Isocyanat-reaktiven Gruppen, multipliziert mit 100, verstanden:

$$\text{Kennzahl} = (\text{Mole Isocyanatgruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

In einer bevorzugten Ausführungsform der Erfindung betrifft die Erfindung ein Verfahren zur Herstellung von Polyurethanen, bevorzugt Polyurethanschaumstoffen, wobei die Komponenten

**A1** Verbindungen mit gegenüber Isocyanaten reaktionsfähigen Wasserstoffatomen enthaltend

**A1.1** 0,25 bis 1,75 Gew.-Teile (bezogen auf die Summe der Gew.-Teile aller Komponenten **A** = 100 Gew.-Teile) mindestens einer Verbindung gemäß Formel (I) oder (II),

**A1.2** 0 bis 60 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 20 bis < 120 mg KOH/g,

**A1.3** 29,00 bis 99,15 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 120 bis < 600 mg KOH/g,

**A1.4** 0 bis 10 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH- und/oder OH-Zahl gemäß DIN 53240-1 in der Fassung von Juni 2013 von 600 bis 4000 mg KOH/g,

**A2** Treibmittel, enthaltend

**A2.1** 0,1 bis 10 Gew.-Teile, bevorzugt 1 bis 5 Gew.-Teile (jeweils bezogen auf die Summe der Gew.-Teile aller Komponenten **A** = 100 Gew.-Teile), chemische Treibmittel wie Wasser und/oder
**A2.2** 0 bis 15 Gew.-Teile (bezogen auf die Summe der Gew.-Teile aller Komponenten **A** = 100 Gew.-Teile) physikalische Treibmittel wie z. B. $CO_2$

und

**A3** 0,5 bis 10 Gew.-Teile (bezogen auf die Summe der Gew.-Teile aller Komponenten **A** = 100 Gew.-Teile) Hilfs- und Zusatzstoffe wie

a) Katalysatoren,
b) oberflächenaktive Zusatzstoffe,
c) Pigmente und/oder Flammschutzmittel,

**B** Di- und/oder Polyisocyanaten mit einem Gehalt von >65 Gew.-% difunktionellen Isocyanaten,

miteinander umgesetzt werden.

**Beispiele**

Prüfmethoden:

Die Messung der Rohdichte wurde gemäß DIN EN ISO 845 in der Fassung von Oktober 2009 durchgeführt. Die Stauchhärte der Schaumstoffe wurde bei 40% Verformung gemäß DIN EN ISO 3386-1 in der Fassung von Oktober 2015 für den 1. und den 4. Zyklus in Aufschäumrichtung bestimmt.

Die Hydroxylzahl wurde gemäß DIN 53240-1 in der Fassung von Juni 2013 bestimmt.

Der Druckverformungsrest (DVR) wurde gemäß DIN EN ISO 1856 in der Fassung von Januar 2008 bei 70°C für 22h bei der angegebenen Druckverformung gemessen (50% und 90%).

Die Werte für die Zugfestigkeit und Bruchdehnung wurden bei 22°C und 48% relativer Luftfeuchte gemäß DIN EN ISO 1798 in der Fassung von April 2008 ermittelt.

Die Bestimmung der Rückstellzeit der viskoelastischen Weichblockschaumstoffe erfolgte in Anlehnung an die IKEA-Prüfmethode IOS-MAT-0076

Die Bestimmung des Gehalts an aromatischen Aminen im Schaumstoff erfolgte entsprechend des Protokolls von G. Skarping durch Extraktion mit 0,1%iger Essigsäure (A. Marand, D. Karlsson, M. Dalene, G. Skarping, Analytica Chimica Acta, 2004. 510, 109-119; J. R. Johnson, D. Karlsson, M. Dalene, G. Skarping, Analytica Chimica Acta, 2010. 678 (1), 117-123), jedoch anders als in der angegebenen Literatur ohne anschließende Derivatisierung. Liegen die Messergebnisse unterhalb der Bestimmungsgrenze, so wird in den nachfolgenden Tabellen der Wert mit <0,2 mg/kg Schaumstoff angegeben, unterhalb der Nachweisgrenze mit <0,06 mg/kg Schaumstoff.

**Beschreibung der Versuche**

Rohstoffe

A1.1-1: Gemisch aus 45 Gew.-% 1,3-Dioxolan-4-methanol und 55 Gew.-% 1,3-Dioxan-5-ol
A1.1-2: Isopropylidenglycerin
A1.2-1: Polyetherpolyol auf der Basis von Glycerin, Ethylenoxid und Propylenoxid mit einem sehr hohen Anteil an Ethylenoxid-Gruppen und einer OH-Zahl von 37 mg KOH/g
A1.2-2: Polyetherpolyolmischung mit wässriger Urea-Lösung und einer OH-Zahl 127 mg KOH/g; hergestellt mittels KOH-Katalyse: Starter: Glycerin sowie 1,2-Propylenglycol
A1.2-3: Polyetherpolyol mit einer OH-Zahl von 28 mg KOH/g, hergestellt durch Alkoxylierung von Glycerin mit einem Gemisch aus Ethylenoxid und Propylenoxid in einem Mengenverhältnis von 87/13
A1.2-4: Füllstoffhaltiges Polyol mit 21,6 % Polyharnstoffdispersion (PHD) als Füllstoff und 78,4% eines Polyetherpolyols auf der Basis von Glycerin, Ethylenoxid und Propylenoxid mit einem zahlengemittelten Molekulargewicht von 4007 g/mol und einer OH-Zahl von 28 mg KOH/g
A1.3-1: Polyetherpolyolmischung mit einer OH-Zahl von 165 mg KOH/g; die Polyetherpolyolmischung enthält eine wässrige Urea-Lösung als katalytisch wirksame Komponente
A1.3-2: Polyetherpolyolmischug mit einer Funktionalität von 1,9 und einer OH-Zahl von 407 mg KOH/g
A1.3-3: Propylenoxid-basiertes Polyolgemisch; hergestellt mittels KOH-Katalyse; Starter: Glycerin sowie 1,2-Propylenglycol; OH-Zahl: 165 mg KOH/g
A1.3-4: Polyetherpolyol auf der Basis von Propylenoxid mit einer Funktionalität von 2 und einer OH-Zahl von 515 mg KOH/g
A1.4-1: Glycerin

A2.1-1: Wasser
A3-1: Schaumstabilisator Tegostab® B8783 LF2 (Handelsprodukt der Firma Evonik)
A3-2: Aminkatalysator, Dabco® NE500 (Handelsprodukte der Firma Evonik)
A3-3: Aminkatalysator, Dabco® NE300 (Handelsprodukte der Firma Evonik)
A3-4: Aminkatalysator, Dabco® NE1060 (Handelsprodukte der Firma Evonik)
A3-5: 1,4-Diazabicyclo[2.2.2]octan (33 Gew.-%) in Dipropylenglykol (67 Gew.-%), Dabco® 33 LV (Handelsprodukt der Firma Evonik)
A3-6: Bis[2-dimethylamino)ethyl]ether (70 Gew.-%) in Dipropylenglykol (30 Gew.-%), Niax® Catalyst A-1 (Handelsprodukt der Firma Momentive Performance Materials)
A3-7: Schaumstabilisator Tegostab® BF2370 (Handelsprodukt der Firma Evonik)
A3-8: Urea-Lösung in Wasser, im Gewichtsverhältnis 1:1
A3-9: Zinnkatalysator, Dabco® T9 (Handelsprodukt der Firma Evonik)
A3-10: Silikonstabilisator Niax® L-3222 (Handelsprodukt der Fa. Momentive Performance Materials)
A3-11: Tertiärer Aminkatalysator Polycat® 58 (Handelsprodukt der Fa. Evonik)
A3-12: Aminkatalysator Dabco® NE1091 (Handelsprodukt der Fa. Evonik)
B-1: Mischung aus MDI und pMDI mit einem mittleren NCO-Gehalt von 32 Gew.-% (Desmodur 10WB94)
B-2: Mischung aus 2,4- und 2,6-TDI mit einem mittleren NCO-Gehalt von 48 Gew.-% (Desmodur T65)
B-3: Isocyanat-Gemisch aus 70 Gew.-% TDI und 30 Gew.-% 4,4'-MDI und höhere Homologe

Als Vergleich zu den erfindungsgemäßen Additiven wurde die Verbindung 4-Hydroxymethyl-1,3-dioxolan-2-on (V1) eingesetzt. Die Struktur der Verbindung V-1 unterscheidet sich von der Komponente **A1.1** gemäß Formel (I) nur dadurch, dass statt $R^1$ und $R^2$ ein doppelt gebundenes Sauerstoffatom enthalten ist. Die erfindungsgemäße Verbindung **A1.1** wird zum Vergleich in den Beispielen ebenfalls als Additiv bezeichnet.

In für die Herstellung von Polyurethanschaumstoffen üblicher Verarbeitungsweise nach dem Einstufenverfahren wurden die in den Beispielen aufgeführten Einsatzstoffe miteinander zur Reaktion gebracht.

**Tabelle 1: Formulierung und Eigenschaften von Polyurethan-Weichschaumstoffen mit MDI bei einer Kennzahl von 76**

| **Beispiel** | | **1*** | **2*** | **3** | **4** | **5*** | **6*** | **7** | **8** | **9*** |
|---|---|---|---|---|---|---|---|---|---|---|
| A1.1-1 | Gew.-Tle. | - | 0,2 | 0,5 | 1,0 | 2,0 | - | - | - | - |
| A1.1-2 | Gew.-Tle. | - | - | - | - | - | 0,2 | 0,5 | 1,0 | 2,0 |
| A1.2-1 | Gew.-Tle. | 34 | 34 | 34 | 34 | 34 | 34 | 34 | 34 | 34 |
| A1.3-1 | Gew.-Tle. | 66 | 66 | 66 | 66 | 66 | 66 | 66 | 66 | 66 |
| A1.3-2 | Gew.-Tle. | 6 | 6 | 6 | 6 | 6 | 6 | 6 | 6 | 6 |
| A2.1-1 | Gew.-Tle. | 1,94 | 1,94 | 1,94 | 1,94 | 1,94 | 1,94 | 1,94 | 1,94 | 1,94 |
| A3-1 | Gew.-Tle. | 0,3 | 0,3 | 0,3 | 0,3 | 0,3 | 0,3 | 0,3 | 0,3 | 0,3 |
| A3-3 | Gew.-Tle. | 0,86 | 0,86 | 0,86 | 0,86 | 0,86 | 0,86 | 0,86 | 0,86 | 0,86 |
| A3-4 | Gew.-Tle. | 0,22 | 0,22 | 0,22 | 0,22 | 0,22 | 0,22 | 0,22 | 0,22 | 0,22 |
| B-1 | Gew.-Tle.[1] | 55,33 | 55,52 | 55,79 | 56,24 | 57,15 | 55,58 | 55,77 | 56,10 | 56,76 |
| **Kennzahl** | | 76 | 76 | 76 | 76 | 76 | 76 | 76 | 76 | 76 |
| Rohdichte | $kg/m^3$ | 41,6 | 41,7 | 41,4 | 41,6 | 41,9 | 41,3 | 41,8 | 42,3 | 43,5 |
| Stauchhärte 1. Zyklus | kPa | 1,15 | 1,27 | 1,09 | 1,03 | 0,92 | 1,13 | 1,06 | 1,08 | 0,89 |
| Stauchhärte 4. Zyklus | kPa | 0,87 | 0,92 | 0,82 | 0,77 | 0,69 | 0,85 | 0,8 | 0,8 | 0,68 |
| DVR 50% | % | 6,3 | 8,2 | 6,6 | 11,1 | 8,4 | 7,5 | 8 | 10,7 | 10,6 |
| DVR 90% | % | 75,4 | 83,3 | 81,9 | 82,7 | 82,3 | 83,4 | 83,5 | 83,5 | 84,9 |
| Zugfestigkeit | kPa | 63 | 62 | 65 | 49 | 66 | 78 | 62 | 59 | 56 |
| Bruchdehnung | % | 171 | 177 | 171 | 184 | 194 | 170 | 180 | 181 | 190 |

(fortgesetzt)

| Beispiel | | 1* | 2* | 3 | 4 | 5* | 6* | 7 | 8 | 9* |
|---|---|---|---|---|---|---|---|---|---|---|
| Rückstellzeit | s | 14,22 | 14,72 | 12,59 | 17,05 | >30 | 21,82 | 22,42 | 20,87 | 25,56 |
| 2,2'-MDA | mg/kg | 0,2 | < 0,2 | < 0,06 | < 0,06 | < 0,06 | < 0,2 | < 0,2 | < 0,2 | < 0,2 |
| 2,4'-MDA | mg/kg | 8,4 | 8,2 | 6,9 | 2,6 | 14 | 12 | 7,5 | 6,3 | 7,9 |
| 4,4'-MDA | mg/kg | 18 | 17 | 12 | 5 | 22 | 25 | 16 | 14 | 17 |
| **MDA-Gesamt** | mg/kg | 26,6 | 25,2 | 18,9 | 7,6 | 36 | 37 | 23,5 | 20,3 | 24,9 |
| *Referenz- oder Vergleichsbeispiel[1] bezogen auf 100 Gew.-Tle. der Komponente A+V<br>DVR = Druckverformungsrest | | | | | | | | | | |

In Beispiel 1 ist als Referenz ein Polyurethan-Weichschaumstoff ohne die Zugabe eines Additivs mit der Formulierung in Tabelle 1 erhalten worden. Der Referenzschaumstoff in Beispiel 1 weist einen Gesamtanteil an MDA von 26,6 mg/kg auf. In den Beispielen 2, 5, 6 und 9 wurde das Additiv **A1.1** in nicht erfindungsgemäßen Mengen eingesetzt. Die Formulierungen in den Beispielen 2 und 6 weisen weniger als die erfindungsgemäße Untergrenze der Komponente **A1.1** auf und die Formulierungen der Beispiele 5 und 9 einen Anteil an Komponente **A1.1** oberhalb der erfindungsgemäßen Obergrenze. Die Polyurethan-Weichschaumstoffe aus den Beispielen 2, 5, 6 und 9 weisen Werte für den MDA-Gesamtgehalt von 24,9 bis 37 mg/kg auf. Im Gegensatz dazu werden in den Beispielen 3, 4, 7 und 8 Polyurethan-Weichschaumstoffe nach dem erfindungsgemäßen Verfahren hergestellt. Die erhaltenen und erfindungsgemäßen Polyurethan-Weichschaumstoffe weisen Werte für den MDA-Gesamtgehalt von 7,6 bis 23,5 mg/kg auf und somit niedrigere Werte als das Referenzbeispiel und die Vergleichsbeispiele.

In Tabelle 2 sind in den Beispielen 10 und 15 jeweils Polyurethan-Weichschaumstoffe ohne die Zugabe eines Additivs als Referenzbeispiele bei einer Kennzahl von 76 (Beispiel 10) und 85 (Beispiel 15) dargestellt. Der Polyurethan-Weichschaumstoff in Beispiel 10 weist dabei einen Gesamtanteil an MDA von 23,1 mg/kg auf. Durch Zugabe des Additivs V-1 in den Beispielen 11 bis 13 wird der Anteil an MDA auf 32,3 bis 39,3 erhöht. Im Gegensatz dazu führt das erfindungsgemäße Verfahren mit der Komponenten **A1.1** zu einer Reduktion des MDA-Gesamtanteils auf 5,8 mg/kg. Der Unterschied in der Struktur von Additiv V-1 zur Komponente **A1.1** führt somit zu einer Erhöhung des MDA-Gehalts im Polyurethan-Schaumstoff bei Verwendung des Additivs V-1.

In den Beispielen 16 und 17 wird das erfindungsgemäße Verfahren bei einer Kennzahl von 85 durchgeführt. Die erfindungsgemäßen Polyurethan-Weichschaumstoffe weisen Gesamtanteile des MDA von 14,3 mg/kg (Beispiel 16) bzw. 21,3 mg/kg (Beispiel 17) auf. Die Polyurethan-Weichschaumstoffe der erfindungsgemäßen Beispiele 16 und 17 weisen somit niedrigere Gesamtanteile an MDA auf als das Referenzbeispiel 15.

**Tabelle 2: Formulierung und Eigenschaften von Polyurethan-Weichschaumstoffen mit MDI bei Kennzahlen von 76 und 85**

| Beispiel | | 10* | 11* | 12* | 13* | 14 | 15* | 16 | 17 |
|---|---|---|---|---|---|---|---|---|---|
| A1.1-1 | Gew.-Tle. | - | - | - | - | 0,75 | - | 0,75 | 1,00 |
| V-1 | Gew.-Tle. | - | 0,5 | 1,00 | 2,00 | - | - | - | - |
| A1.2-1 | Gew.-Tle. | 34 | 34 | 34 | 34 | 34 | 34 | 34 | 34 |
| A1.3-1 | Gew.-Tle. | 66 | 66 | 66 | 66 | 66 | 66 | 66 | 66 |
| A1.3-2 | Gew.-Tle. | 6 | 6 | 6 | 6 | 6 | 6 | 6 | 6 |
| A2.1-1 | Gew.-Tle. | 1,93 | 1,93 | 1,93 | 1,93 | 1,93 | 1,93 | 1,93 | 1,93 |
| A3-1 | Gew.-Tle. | 0,3 | 0,3 | 0,3 | 0,3 | 0,3 | 0,3 | 0,3 | 0,3 |
| A3-3 | Gew.-Tle. | 0,22 | 0,22 | 0,22 | 0,22 | 0,22 | 0,22 | 0,22 | 0,22 |
| A3-4 | Gew.-Tle. | 0,86 | 0,86 | 0,86 | 0,86 | 0,86 | 0,86 | 0,86 | 0,86 |
| B-1 | Gew.-Tle.[1] | 55,34 | 55,76 | 56,18 | 57,03 | 56,00 | 61,89 | 62,64 | 62,88 |
| **Kennzahl** | | 76 | 76 | 76 | 76 | 76 | 85 | 85 | 85 |
| Rohdichte | kg/$m^3$ | 41,6 | 41,4 | 41,1 | 43,1 | 41,1 | 39,8 | 39,6 | 40,5 |

(fortgesetzt)

| Beispiel | | 10* | 11* | 12* | 13* | 14 | 15* | 16 | 17 |
|---|---|---|---|---|---|---|---|---|---|
| Stauchhärte 1. Zyklus | kPa | 1,15 | 1,08 | 0,84 | 0,78 | 1,16 | 3,92 | 2,82 | 3,01 |
| Stauchhärte 4. Zyklus | kPa | 0,85 | 0,81 | 0,65 | 0,6 | 0,86 | 2,31 | 1,7 | 1,83 |
| DVR 50% | % | 8,5 | 6,3 | 7,8 | 12 | n.b. | n.b. | n.b. | n.b. |
| DVR 90% | % | 80,7 | 80 | 81,1 | 80,3 | n.b. | n.b. | n.b. | n.b. |
| Zugfestigkeit | kPa | 56 | 64 | 58 | 54 | n.b. | n.b. | n.b. | n.b. |
| Bruchdehnung | % | 184 | 185 | 186 | 183 | n.b. | n.b. | n.b. | n.b. |
| Rückstellzeit | s | 8,15 | 9,11 | 8,45 | 11,12 | n.b. | n.b. | n.b. | n.b. |
| 2,2'-MDA | mg/kg | 0,4 | 0,3 | 0,3 | 0,5 | 1,3 | 1,8 | 1,5 | 1,7 |
| 2,4'-MDA | mg/kg | 7,7 | 12 | 15 | 14 | 1,9 | 6,1 | 3,6 | 4,6 |
| 4,4'-MDA | mg/kg | 15 | 20 | 24 | 21 | 2,6 | 17 | 9,2 | 15 |
| **MDA-Gesamt** | mg/kg | 23,1 | 32,3 | 39,3 | 35,5 | 5,8 | 24,9 | 14,3 | 21,3 |

* Referenz- oder Vergleichsbeispiel
[1] bezogen auf 100 Gew.-Tle. der Komponente A+V
n.b. = nicht bestimmt
DVR = Druckverformungsrest

Die Tabelle 3 zeigt die Reduktion des MDA-Anteils in Polyurethan-Weichschaumstoffen mit einer Kennzahl von 87. Das Beispiel 18 dient als Referenzbeispiel ohne ein Additiv und weist einen Gesamtanteil an MDA von 1,1 mg/kg auf. Die Beispiele 19 und 20 enthalten 0,75 bzw. 1,00 Gew.-Tle. der Komponente A1.1, wodurch der Anteil an MDA in den Polyurethan-Weichschaumstoffen auf 0,2 bzw. 0,4 mg/kg reduziert wird.

**Tabelle 3: Formulierung und Eigenschaften von Polyurethan-Weichschaumstoffen mit MDI bei einer Kennzahl von 87**

| Beispiel | | 18* | 19 | 20 |
|---|---|---|---|---|
| A1.1-1 | Gew.-Tle. | - | 0,75 | 1,00 |
| A1.2-1 | Gew.-Tle. | 36 | 36 | 36 |
| A1.2-2 | Gew.-Tle. | 64 | 64 | 64 |
| A1.3-2 | Gew.-Tle. | 6 | 6 | 6 |
| A2.1-1 | Gew.-Tle. | 1,33 | 1,33 | 1,33 |
| A3-1 | Gew.-Tle. | 0,25 | 0,25 | 0,25 |
| A3-5 | Gew.-Tle. | 0,3 | 0,3 | 0,3 |
| A3-6 | Gew.-Tle. | 0,14 | 0,14 | 0,14 |
| B-1 | Gew.-Tle.[1] | 51,15 | 51,15 | 51,15 |
| **Kennzahl** | | 87 | 87 | 87 |
| Rohdichte | $kg/m^3$ | 51,6 | 52,4 | 53,3 |
| Stauchhärte 1. Zyklus | kPa | 2,82 | 2,20 | 2,0 |
| Stauchhärte 4. Zyklus | kPa | 2,19 | 1,77 | 1,6 |
| DVR 50% | % | 1,0 | 0,9 | 0,8 |
| DVR 90% | % | 1,5 | 1 | 1,3 |

(fortgesetzt)

| **Beispiel** | | **18*** | **19** | **20** |
|---|---|---|---|---|
| Zugfestigkeit | kPa | 87 | 70 | 69 |
| Bruchdehnung | % | 151 | 174 | 178 |
| 2,2'-MDA | mg/kg | <0,2 | <0,2 | <0,2 |
| 2,4'-MDA | mg/kg | 0,4 | 0,2 | 0,2 |
| 4,4'-MDA | mg/kg | 0,7 | <0,2 | 0,2 |
| **MDA-Gesamt** | mg/kg | 1,1 | 0,2 | 0,4 |
| * Referenz-oder Vergleichsbeispiel<br>[1] bezogen auf 100 Gew.-Tle. der Komponente A+V<br>DVR = Druckverformungsrest | | | | |

Das Gleiche wird in Tabelle 4 für Polyurethan-Weichschaumstoffe auf Basis von TDI dargestellt. Bei einer Kennzahl von 93 und einem TDI-Gemisch als Isocyanat, weist die Formulierung ohne ein Additiv (Beispiel 21) einen Anteil von 22,5 mg/kg and TDA auf. Der Einsatz einer erfindungsgemäßen Menge an Komponente A1.1 führt zu einer Reduktion des aromatischen Amins im Polyurethan-Weichschaumstoff auf 8,1 (Beispiel 22) bzw. 12,3 mg/kg (Beispiel 23).

**Tabelle 4: Formulierung und Eigenschaften von Polyurethan-Weichschaumstoffen mit TDI bei einer Kennzahl von 93**

| **Beispiel** | | **21*** | **22** | **23** |
|---|---|---|---|---|
| A1.1-1 | Gew.-Tle. | - | 0,50 | 1,00 |
| A1.3-3 | Gew.-Tle. | 100 | 100 | 100 |
| A1.3-4 | Gew.-Tle. | 4 | 4 | 4 |
| A3-5 | Gew.-Tle. | 0,4 | 0,4 | 0,4 |
| A3-6 | Gew.-Tle. | 0,05 | 0,05 | 0,05 |
| A3-7 | Gew.-Tle. | 0,85 | 0,85 | 0,85 |
| A3-8 | Gew.-Tle. | 0,6 | 0,6 | 0,6 |
| A3-9 | Gew.-Tle. | 0,12 | 0,12 | 0,12 |
| B-2 | Gew.-Tle. | 47,41 | 47,41 | 47,41 |
| **Kennzahl** | | 93 | 93 | 93 |
| Rohdichte | $kg/m^3$ | 38,1 | 42,4 | 44,0 |
| Stauchhärte 1. Zyklus | kPa | 3,81 | 7,68 | 5,43 |
| Stauchhärte 4. Zyklus | kPa | 2,15 | 4,28 | 3,15 |
| DVR 50% | % | 10,9 | 5,5 | 8,0 |
| DVR 90% | % | 9,9 | 7,3 | 28,4 |
| Zugfestigkeit | kPa | 65 | 104 | 91 |
| Bruchdehnung | % | 166 | 177 | 202 |
| 2,4-TDA | mg/kg | 6,5 | 1,9 | 3,7 |
| 2,6-TDA | mg/kg | 16 | 6,2 | 8,6 |

(fortgesetzt)

| Beispiel | | 21* | 22 | 23 |
|---|---|---|---|---|
| TDA-Gesamt | mg/kg | 22,5 | 8,1 | 12,3 |
| * Referenz-oder Vergleichsbeispiel<br>[1] bezogen auf 100 Gew.-Tle. der Komponente A+V<br>DVR = Druckverformungsrest | | | | |

Die Tabelle 5 zeigt Formulierungen für Polyurethan-Formschaumstoffe. Zur Bildung der Formschaumstoffe wird das Reaktionsgemisch in eine 45°C warme Kastenform aus Aluminium mit 10 $dm^3$ Volumen gegossen, wobei ein Trennmittel appliziert wird. Die Form wird verschlossen und verriegelt. Nach 10 Minuten wird die Verriegelung geöffnet und entspannt. Die erhaltenen Polyurethan-Formschaumstoffe wurden drei Tage offen gelagert bevor der Gehalt an aromatischen Aminen bestimmt wurde. Der in Tabelle 5 angegebene Wert für die aromatischen Amine ist dabei ein Mittelwert aus drei Proben.

Der durch die Formulierung von Referenzbeispiel 24 erhaltene Polyurethan-Formschaumstoff enthält kein Additiv zur Reduktion von aromatischen Aminen. Der Polyurethan-Formschaumstoff von Referenzbeispiel 24 weist eine Gesamtsumme von 218,4 mg/kg an aromatischen Aminen auf. Im Gegensatz dazu wurden in den Beispielen 25 und 26 eine Komponente **A1.1** zu 0,75 bzw. 1,00 Gew.-Tle. eingesetzt. In beiden Fällen wird der Anteil an aromatischen Aminen in den Polyurethan-Formschaumstoffen reduziert.

**Tabelle 5: Formulierung und Eigenschaften von Polyurethan-Formschaumstoffen mit TDI und MDI**

| **Beispiel** | | **24*** | **25** | **26** |
|---|---|---|---|---|
| A1.1-1 | Gew.-Tle. | - | 0,75 | 1,00 |
| A1.2-1 | Gew.-Tle. | 1,50 | 1,50 | 1,50 |
| A1.2-3 | Gew.-Tle. | 92,0 | 92,0 | 92,0 |
| A1.2-4 | Gew.-Tle. | 8,0 | 8,0 | 8,0 |
| A1.4-1 | Gew.-Tle. | 1,00 | 1,00 | 1,00 |
| A2.1-1 | Gew.-Tle. | 3,24 | 3,24 | 3,24 |
| A3-10 | Gew.-Tle. | 0,80 | 0,80 | 0,80 |
| A3-11 | Gew.-Tle. | 0,3 | 0,3 | 0,3 |
| A3-12 | Gew.-Tle. | 0,7 | 0,7 | 0,7 |
| B-3 | Gew.-Tle.[1] | 30,8 | 31,1 | 31,2 |
| **Kennzahl** | | 75 | 75 | 75 |
| Formteildichte | $kg/m^3$ | 58,3 | 58,1 | 58,1 |
| 2,4-TDA | mg/kg | 6,7 | 5,6 | 5,5 |
| 2,6-TDA | mg/kg | 203 | 176 | 166 |
| 2,2-MDA | mg/kg | 2,5 | 2,4 | 2,5 |
| 2,4-MDA | mg/kg | 6,2 | 4,6 | 5,1 |
| 4,4-MDA | mg/kg | < 0,06 | 2,2 | 2,4 |
| Summe aromatischer Amine | mg/kg | 218,4 | 190,8 | 181,5 |
| *Referenz-oder Vergleichsbeispiel<br>[1] bezogen auf 100 Gew.-Tle. der Komponente A+V | | | | |

## Patentansprüche

**1.** Verfahren zur Herstellung von Polyurethan-Weichschaumstoffen, wobei die Komponenten

**A** enthaltend

**A1** Verbindungen mit gegenüber Isocyanaten reaktionsfähigen Wasserstoffatomen,
**A2** Treibmittel
und gegebenenfalls
**A3** Hilfs- und Zusatzstoffe wie

a) Katalysatoren,
b) oberflächenaktive Zusatzstoffe,
c) Pigmente und/oder Flammschutzmittel

und
**B** Di- und/oder Polyisocyanaten,
bei einer Isocyanat-Kennzahl von unter 100 miteinander umgesetzt werden, **dadurch gekennzeichnet, dass** die Komponente **A1** 0,25 bis 1,75 Gew.-% (bezogen auf das Gesamtgewicht der Komponente **A**) Komponente **A1.1** enthält, und **A1.1** aus mindestens einer Verbindung gemäß Formel (I) oder (II) besteht,

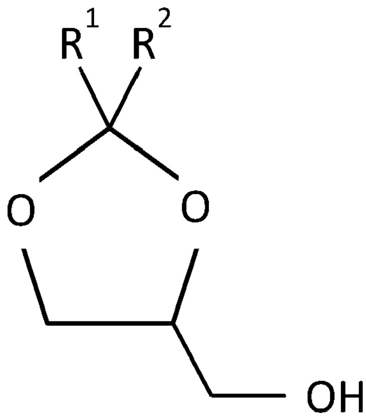

(I)

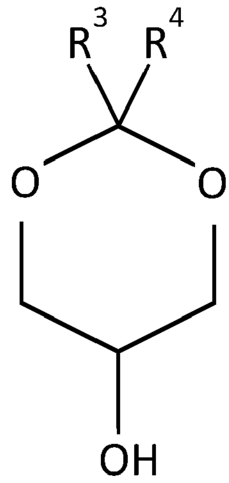

(II)

wobei
$R^1$, $R^2$, $R^3$ und $R^4$ unabhängig voneinander für H oder ein C1-bis C3-Alkylrest stehen.

2. Verfahren gemäß Anspruch 1, **dadurch gekennzeichnet, dass** die Komponente

**A** die Komponenten

**A1** Verbindungen mit gegenüber Isocyanaten reaktionsfähigen Wasserstoffatomen, enthaltend

**A1.1** 0,25 bis 1,75 Gew.-Teile (bezogen auf die Summe der Gew.-Teile aller Komponenten **A** = 100 Gew.-Teile) mindestens einer Verbindung gemäß Formel (I) oder (II),
**A1.2** 0 bis 60 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH-Zahl gemäß DIN 53176 in der Fassung von November 2002 und/oder OH-Zahl gemäß DIN 53240-1 in der Fassung von Juni 2013 von 20 bis < 120 mg KOH/g,
**A1.3** 29,00 bis 99,15 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer NH-Zahl gemäß DIN 53176 in der Fassung von November 2002 und/oder OH-Zahl gemäß DIN 53240-1 in der Fassung von Juni 2013 von 120 bis < 600 mg KOH/g,
**A1.4** 0 bis 10 Gew.-Teile (bezogen auf die Summe der Gew.-Teile aller Komponenten **A** = 100 Gew.-Teile) gegenüber Isocyanaten reaktionsfähigen Wasserstoffatomen aufweisenden Verbindungen mit einer

NH-Zahl gemäß DIN 53176 in der Fassung von November 2002 und/oder OH-Zahl gemäß DIN 53240-1 in der Fassung von Juni 2013 von 600 bis 4000 mg KOH/g,

**A2** Treibmittel, enthaltend

**A2.1** 0,1 bis 10 Gew.-Teile (bezogen auf die Summe der Gew.-Teile aller Komponenten A = 100 Gew.-Teile) chemische Treibmittel,
**A2.2** 0 bis 15 Gew.-Teile (bezogen auf die Summe der Gew.-Teile aller Komponenten **A** = 100 Gew.-Teile) physikalische Treibmittel,

**A3** 0,5 bis 15 Gew.-Teile (bezogen auf die Summe der Gew.-Teile aller Komponenten **A** = 100 Gew.-Teile) Hilfs- und Zusatzstoffe,

umfasst.

**3.** Verfahren gemäß Anspruch 1 oder 2, **dadurch gekennzeichnet, dass** die Verbindung **A1.1** in einem Anteil von 0,40 Gew.-% bis 1,50 Gew.-% vorliegt, bezogen auf das Gesamtgewicht der Komponente **A.**

**4.** Verfahren gemäß Anspruch 1 oder 2, **dadurch gekennzeichnet, dass** die Verbindung **A1.1** in einem Anteil von 0,40 Gew.-% bis 1,00 Gew.-% vorliegt, bezogen auf das Gesamtgewicht der Komponente **A.**

**5.** Verfahren gemäß einem der Ansprüche 1 bis 4, **dadurch gekennzeichnet, dass** $R^1$, $R^2$, $R^3$ und $R^4$ gleich sind.

**6.** Verfahren gemäß einem der Ansprüche 1 bis 5, **dadurch gekennzeichnet, dass** $R^1$, $R^2$, $R^3$ und $R^4$ jeweils für H, eine Methyl- oder eine Ethylgruppe stehen.

**7.** Verfahren gemäß einem der Ansprüche 1 bis 4, **dadurch gekennzeichnet, dass** die Verbindung **A1.1** ausgewählt ist aus der Gruppe bestehend aus Isopropylidenglycerin, 1,3-Dioxolan-4-methanol, 1,3-Dioxan-5-ol und Gemischen aus den genannten Verbindungen.

**8.** Verfahren gemäß einem der Ansprüche 1 bis 7, wobei als Di- und/oder PolyisocyanatKomponente mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt wird.

**9.** Verfahren gemäß einem der Ansprüche 1 bis 8, **dadurch gekennzeichnet, dass** die Umsetzung bei einer Isocyanat-Kennzahl von 60 bis unter 100 stattfindet.

**10.** Verfahren gemäß einem der Ansprüche 1 bis 8, **dadurch gekennzeichnet, dass** die Umsetzung bei einer Isocyanat-Kennzahl von 60 bis 95 stattfindet.

**11.** Polyurethan-Weichschaumstoffe, erhältlich nach einem Verfahren gemäß einem der Ansprüche 1 bis 10.

**12.** Polyurethan-Weichschaumstoffe, gemäß Anspruch 11 mit einem Raumgewicht von 4 bis 600 $kg/m^3$, bevorzugt 15 bis 120 $kg/m^3$.

**13.** Verwendung der Polyurethan-Weichschaumstoffe, gemäß Anspruch 11 oder 12 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

**14.** Verwendung einer Verbindung **A1.1** gemäß Formel (I) oder (II) zur Verminderung des Gehaltes an aromatischen Aminen in Polyurethan-Weichschaumstoffen

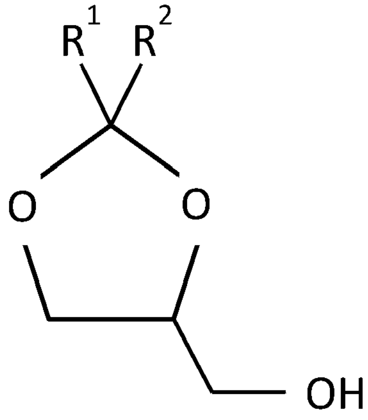

(I)

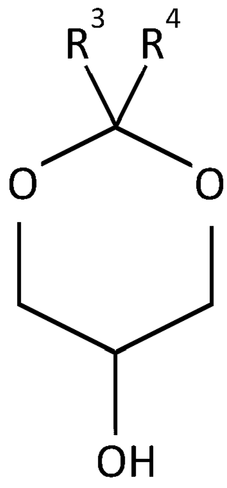

(II)

wobei
$R^1$, $R^2$, $R^3$ und $R^4$ unabhängig voneinander für H oder ein C1- bis C3-Alkylrest stehen.

**15.** Verwendung gemäß Anspruch 14, **dadurch gekennzeichnet, dass** die Verbindung **A1.1** ausgewählt ist aus der Gruppe bestehend aus Isopropylidenglycerin, 1,3-Dioxolan-4-methanol, 1,3-Dioxan-5-ol und Gemischen aus den genannten Verbindungen.

Europäisches Patentamt
European Patent Office
Office européen des brevets

# EUROPÄISCHER RECHERCHENBERICHT

Nummer der Anmeldung
EP 21 18 9140

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | EP 0 908 478 A1 (BASF AG [DE])<br>14. April 1999 (1999-04-14)<br>* Absätze [0001] - [0018], [0022], [0025], [0029], [0032] - [0034] *<br>* Absätze [0036], [0050] - [0052]; Beispiel 37; Tabelle 7 *<br>----- | 1-13<br>14,15 | INV.<br>C08G18/28<br>C08G18/18<br>C08G18/20<br>C08G18/24<br>C08G18/40<br>C08G18/08<br>C08G18/48<br>C08G18/32<br>C08G18/66<br>C08G18/76<br>C08G18/16 |
| A,D | DE 199 19 826 A1 (BASF AG [DE])<br>2. November 2000 (2000-11-02)<br>* Seite 1, Zeilen 3-7 *<br>* Seite 1, Zeile 68 - Seite 2, Zeile 15 *<br>* Seiten 7-8; Beispiel 1; Tabelle 1 *<br>----- | 1-15 | |
| A | DE 101 08 709 A1 (BASF AG [DE])<br>5. September 2002 (2002-09-05)<br>* Absätze [0001] - [0003], [0005], [0006] *<br>* Beispiele 1,3-7 *<br>----- | 1-15 | |
| | | | RECHERCHIERTE SACHGEBIETE (IPC) |
| | | | C08G |

1 Der vorliegende Recherchenbericht wurde für alle Patentansprüche erstellt

| Recherchenort | Abschlußdatum der Recherche | Prüfer |
|---|---|---|
| München | 9. Dezember 2021 | Neugebauer, Ute |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 21 18 9140

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-2021

| Im Recherchenbericht angeführtes Patentdokument | Datum der Veröffentlichung | Mitglied(er) der Patentfamilie | Datum der Veröffentlichung |
|---|---|---|---|
| EP 0908478 A1 | 14-04-1999 | AT 295381 T | 15-05-2005 |
| | | CA 2246636 A1 | 10-04-1999 |
| | | DE 19744747 A1 | 15-04-1999 |
| | | EP 0908478 A1 | 14-04-1999 |
| | | ES 2241087 T3 | 16-10-2005 |
| | | US 6586485 B1 | 01-07-2003 |
| DE 19919826 A1 | 02-11-2000 | AT 309284 T | 15-11-2005 |
| | | AU 4748300 A | 17-11-2000 |
| | | DE 19919826 A1 | 02-11-2000 |
| | | DK 1187865 T3 | 30-01-2006 |
| | | EP 1187865 A1 | 20-03-2002 |
| | | ES 2252001 T3 | 16-05-2006 |
| | | WO 0066643 A1 | 09-11-2000 |
| DE 10108709 A1 | 05-09-2002 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19919826 A1
- DE 19928687 A1
- WO 2020084003 A1


### In der Beschreibung aufgeführte Nicht-Patentliteratur


- **A. MARAND ; D. KARLSSON ; M. DALENE ; G. SKARPING.** *Analytica Chimica Acta,* 2004, vol. 510, 109-119
- **J. R. JOHNSON ; D. KARLSSON ; M. DALENE ; G. SKARPING.** *Analytica Chimica Acta,* 2010, vol. 678 (1), 117-123